# FASCICULE DE BREVET EUROPEEN

(11) **EP 1 363 443 B1**
(45) Date de publication et mention de la délivrance du brevet: **05.03.2008**
(21) Numéro de dépôt: 03291120.8
(22) Date de dépôt: 14.05.2003
(51) Int. Cl.: H04M 1/60, H04B 1/38

(54) **Adapteur universel de téléphone "mains libres" de voiture**
Universeller Freisprech-Telefonadapter im Fahrzeug
Universal "hands free" car telephone adapter

(30) Priorité: 14.05.2002 FR 0205917
(43) Date de publication de la demande: 19.11.2003
(73) Titulaire: Parrot, 75010 Paris (FR)
(72) Inventeur: Cassan, Didier, 45000 Orleans (FR); Besnard, Nicolas, 94120 Fontenay Sous Bois (FR)
(74) Mandataire: Dupuis-Latour, Dominique

(56) Documents cités:
- DE-U- 20 120 820
- DE-U- 29 717 811
- US-A- 6 134 456

## Description

L'invention concerne les dispositifs électroniques utilisés à bord des véhicules automobiles et susceptibles d'être couplés à un téléphone portable, notamment les dispositifs appelés "*car kits*", c'est-à-dire les adaptateurs de voiture pour téléphones portables permettant en particulier d'assurer un fonctionnement "mains-libres" de ces derniers.

Elle a en particulier pour objet de proposer un système universel de téléphonie mains libres qui puisse être installé "en première monte" de façon indifférenciée sur des véhicules automobiles.

L'invention s'applique notamment aux téléphones cellulair-es opérant selon le système GSM, qui est aujourd'hui le standard européen universel de téléphonie cellulaire. Cette dénomination n'est cependant en aucune façon limitative et, comme on le comprendra, l'invention n'est pas liée au type de réseau de téléphonie utilisé et peut aussi bien s'appliquer à d'autres standards de téléphonie mobile, analogique ou numérique.

Le WO-A-98/45997 (Parrot SA) décrit un tel adaptateur de voiture pour radiotéléphone, dont l'ergonomie est particulièrement étudiée pour permettre une utilisation en configuration totalement "mains-libres", notamment au moyen de circuits perfectionnés de reconnaissance et de synthèse vocale.

Un tel dispositif, que l'on désignera par la suite globalement sous le terme d"'adaptateur", comporte d'une part, un "boîtier" intégrant une carte-mère comportant la très grande majorité des circuits électroniques, reliée par un câble à un "support" en forme de berceau placé par exemple sur la planche de bord du véhicule et susceptible de recevoir le téléphone portable.

Le boîtier, qui est généralement inaccessible à l'utilisateur, est dépourvu de commandes et commutateurs. Il est seulement relié à un microphone et à un organe de restitution sonore, direct (par un haut-parleur relié au boîtier) ou indirect (via l'autoradio du véhicule, si ce dernier en est pourvu). Le boîtier peut être installé sur le véhicule "en première monte" par le constructeur, en usine, ou bien ultérieurement par l'utilisateur (boîtier "*add-on*").

Le support comporte un berceau pouvant recevoir le téléphone et qui est installé à portée de main de l'utilisateur, par exemple sur la planche de bord, par un moyen de fixation approprié. Du point de vue électrique, le support comporte une connectique avec un connecteur d'antenne, une borne de recharge de la batterie du téléphone, des lignes d`entrée/sortie de signaux audio, et un bus numérique permettant d'échànger des données et des commandes entre le téléphone et le boîtier distant.

Il existe également des configurations dans lesquelles la liaison entre le téléphone et le boîtier distant est établie par des moyens sans fil, par exemple via une interface de type *Bluetooth.*

Le point de départ de l'invention consiste à disposer d'un modèle unique de boîtier, universel et indifférencié, dont la restitution audio puisse être assurée quel que soit l'équipement du véhicule.

Les US-A-6 134 456 et DE-U-297 17 811 décrivent des équipements "mains libres" combinés à l'installation audio du véhicule, avec des commutations et traitements de signaux appropriés selon la fonctionnalité mise en oeuvre à un moment donné : écoute audio, conversation téléphonique, etc.

Ainsi, *le but général de l'invention* est de proposer une configuration d'adaptateur mains-libres pour téléphone de voiture comprenant un boîtier universel, notamment un boîtier intégré au véhicule et inaccessible à l'utilisateur, qui soit compatible avec tous les types d'autoradios susceptibles d'être rencontrés sur un véhicule (et, en l'absence d'autoradio, qui permette la restitution sonore en branchant directement un haut-parleur sur le boîtier).

Outre ce caractère universel, le boîtier doit bien entendu être très résistant à tous les parasites électriques, électromagnétiques ou autres, qui peuvent être souvent très perturbants. Les standards en matière automobile exigent en particulier que les équipements électroniques puissent résister à des pics de tension importants, des champs électromagnétiques et des parasites divers, etc. sans aucun dysfonctionnement ni risque d'endommagement.

Plus précisément, *le but de l'invention* est de proposer un adaptateur dont le boîtier comporte un circuit de sortie audio adaptable directement (c'est-à-dire sans ajout de composant supplémentaire) à toutes les configurations susceptibles d'être rencontrées dans un véhicule donné : absence ou présence d'autoradio, autoradio mono ou stéréo, entrée(s) différentibile(s) ou bien référencée(s) à la masse, avec ou sans entrée "mute" d'interruption de la source radio, etc.

De plus, comme on le verra, ce circuit audio doit présenter une résistance élevée aux courts-circuits, et doit être robuste à l'encontre de toutes les erreurs de manipulation qui pourraient être commises au moment de l'installation. De plus, du point de vue électrique, l'absence de bouclage de masse évitera de capter des signaux parasites et procurera ainsi un excellent rapport signal/bruit.

À cet effet, Il invention propose un adaptateur "mains libres" pour téléphone portable du type général décrit par le US-A-6 134 456 précité, et dont le circuit audio est configuré de la manière exposée à la revendication 1. Les sous-revendications exposent des mises en oeuvre particulières préférentielles.

On va maintenant décrire un exemple d'adaptateur de véhicule automobile pour téléphone portable réalisé conformément aux divers enseignements de la présente invention.
La figure 1 est une vue schématique montrant les différents organes mis en oeuvre dans le véhicule.
La figure 2 est une représentation schématique du bornier du boîtier universel; montrant les diverses bomes de liaison utilisées pour configurer l'installation de la figure 1.
La figure 3 montre le schéma de l'étage de sortie audio du boîtier de l'installation de la figure 1.

On va tout d'abord exposer l'architecture générale de l'adaptateur de l'invention, avant de décrire plus en détail le circuit de sortie audio.

### Architecture générale de l'adaptateur _

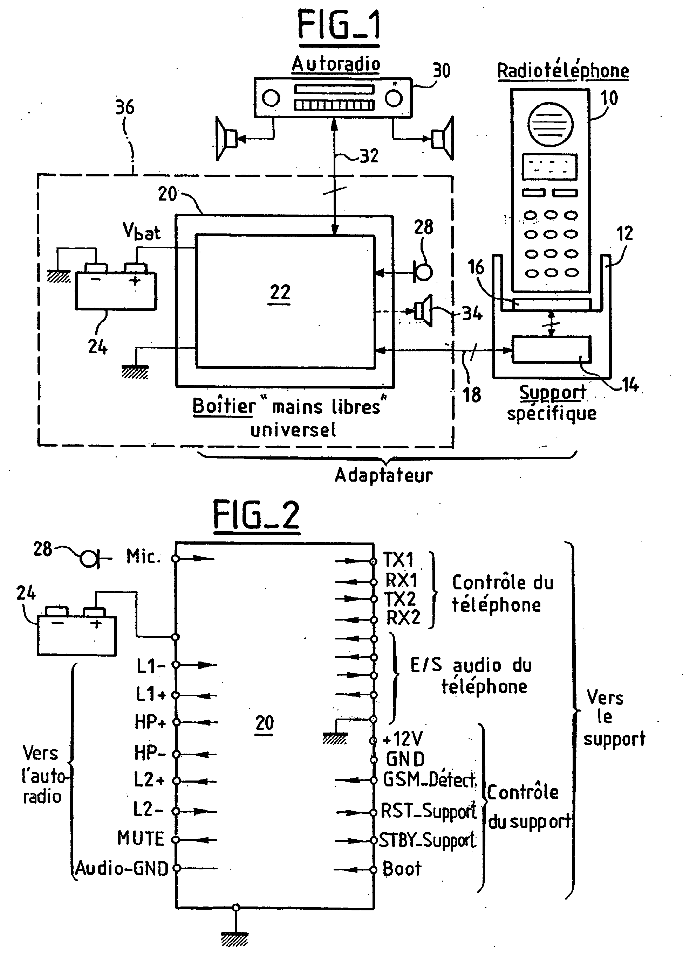

La figure 1 montre schématiquement les différents organes d'une configuration de téléphone de voiture "mains-libres". Cet équipement est utilisé avec un radiotéléphone 10, par exemple un modèle de téléphone cellulaire GSM 2 watts, qui est posé par l'utilisateur, lorsqu'il entre dans son véhicule, dans un support spécifiquement adapté à ce modèle de téléphone.

Le support comprend un berceau 12 recevant le téléphone 10 et fixé par exemple à la planche de bord du véhicule par tout moyen approprié. Le support comporte également un circuit électronique 14, relié aux différentes bornes du téléphone par une connectique appropriée 16 permettant d'accéder à un bus de données et à divers circuits tels que les circuits d'antenne et d'alimentation du téléphone ou de recharge de la batterie de ce dernier.

Ce support, qui est donc placé à portée de main de L'utilisateur, est relié par un bus 18 à un boîtier 20 permettant dé piloter les différentes fonctions "mains-libres". Le boîtier 20 est installé dans un endroit généralement inaccessible au conducteur (par exemple derrière la planche de bord), et ne comporte pas d'interrupteur ou de bouton de commande. Il intègre seulement un circuit universel (carte-mère) 22 relié par un bornier
- qui sera décrit plus précisément en référence à la figure 2 - à divers organes tels que :

- batterie d'alimentation 24 du véhicule, délivrant une tension V_{BAT}, généralement de 12 V, via la commutateur de la clef de contact,
- microphone 28, par exemple un microphone intégré à la planche de bord,
- autoradio 30 (si le véhicule en est équipé), via une liaison 32 dont on décrira plus loin le mode particulier de connexion en fonction du type d'autoradio, en référence à la figure 4,
- haut-parleur dédié 34, relié directement au circuit 22 si le véhicule est dépourvu d'autoradio, ou si l'utilisateur ne souhaite pas utiliser ce dernier pour la téléphonie mains-libres.

La frontière définie par la ligne en trait mixte 36 indique les éléments qui présentent un caractère universel, c'est-à-dire qui ne nécessitent pas d'adaptation en fonction du modèle de radiotéléphone et/ou du modèle d'autoradio, et qui donc peuvent être intégrés à l'identique dans tous les véhicules.

Cette adaptation est réalisée :
- en fonction du modèle de radiotéléphone, par le choix d'un support spécifique à ce modèle, qu'il suffira de fixer sur la planche de bord et de relier au boîtier universel par la liaison (également universelle) 18 ;
- en fonction de l'autoradio, par une configuration particulière de la liaison 32 entre les bornes de l'autoradio et certaines des bornes de sortie audio du circuit 22 (ou, à défaut d'autoradio, par le branchement direct d'un haut-parleur 34).

La figure 2 illustre les différentes bomes d'entrée et de sortie du boîtier 20.

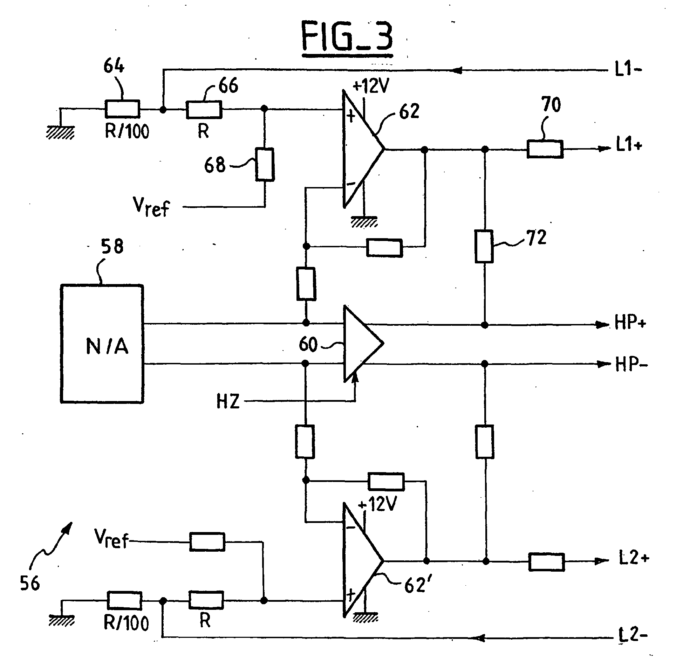

Outre les bornes de liaison à la batterie 24 et au micro 28, le bornier du boîtier comporte essentiellement :
a) des bomes de contrôle du téléphone, c'est-à-dire des bornes permettant d'échanger des signaux logiques de commande et de données avec le téléphone.
   Plus précisément, les bornes de contrôle du téléphone sont des bornes de liaison série "TX1 ", "RX1 ", "TX2" et "RX2", permettant d'échanger des signaux logiques avec tout radiotéléphone, par exemple conformément au protocole de communication édicté par la recommandation ETSI *GSM 0707* ;
b) des bornes d'entrée/sortie de signaux audio avec le téléphone (généralement avec une masse analogique dédiée) ;
c) des bornes de contrôle du support, c'est-à-dire des bornes permettant d'échanger des signaux logiques de commande avec le circuit intégré au support, qui comprennent :
   - une borne "+12 V" d'alimentation générale obtenue à partir de la tension de batterie du véhicule, pour pouvoir alimenter un circuit, intégré au support, de recharge de la batterie du téléphone,
   - une borne de masse "GND", qui sert de référence à la fois pour l'alimentation et les signaux logiques,
   - une entrée "GSM-Detect", qui reçoit du support un signal logique indiquant qu'un téléphone vient d'être mis en place dans le berceau (cette détection sera décrite ci-dessous plus en détail en référence à la figure 3) ; ce signal a notamment pour rôle de faire sortir le boîtier 20 d'un état à faible consommation pour le rendre immédiatement fonctionnel dès la mise en place d'un téléphone,
   - une sortie "RST-Support", pour la remise à zéro des circuits du support après que le boîtier soit sorti de son état de veille,
   - une sortie "STBY-Support", permettant d'envoyer au support un ordre de mise en sommeil suite à la détection du retrait du téléphone hors de son support,
   - une entrée série "BOOT", destinée, à la première mise en place d'un radiotéléphone d'un modèle donné dans le support, à déclencher le téléchargement vers le boîtier d'un module logiciel de personnalisation mémorisé dans le circuit 14 du support, par exemple dans une mémoire flash de ce circuit. Une fois le téléchargement achevé, ce module sera gardé en mémoire une fois pour toutes par le microcontrôleur du boîtier 20. De cette manière, le module logiciel spécifique permettant le pilotage du modèle de téléphone correspondant est intégré au support spécifique à ce modèle; et la personnalisation logicielle du boîtier est opérée la première fois que l'utilisateur met en place le téléphone dans le support, de façon totalement transparente pour cet utilisateur. Cette fonction est en elle-même bien connue, et par exemple implémentée dans le "chipset" de l'adaptateur de voiture *Parrot* 3 commercialisé depuis 1998 par la demanderesse.
c) et des bornes d'entrée/sortie audio, permettant de piloter l'autoradio ou un haut-parleur et comprenant :
   - deux entrées ligne "L1-" et "L2-",
   - deux sorties ligne "L1 +" et "L2+",
   - deux sorties de puissance "HP+" et "HP-" pour le raccordement direct d'un haut-parleur,
   - une sortie "MUTE",
   - une borne "Audio-GND" de masse propre à l'étage audio.

### Circuit de sortie audio

On va maintenant décrire, en référence à la figure 3, le circuit de sortie audio 56 incorporé au boîtier 20.

Ce circuit permet notamment de s'adapter à un très grand nombre de configurations de véhicule, et notamment de types d'autoradio embarqué.

On peut recenser les sept situations typiques suivantes :
- absence d'autoradio (ou bien l'utilisateur ne veut pas utiliser l'autoradio pour le circuit de téléphonie mains-libres) : le circuit audio doit pouvoir alimenter directement un haut-parleur dédié ;
- présence d'un autoradio simple, nécessitant de partager les haut-parleurs de la voiture entre l'autoradio et le boîtier. Il est nécessaire que le boîtier pilote un relais pour commuter le haut-parleur soit sur l'autoradio soit sur la sortie audio du boîtier lorsque cette dernière délivre un signal ;
- cas identique au précédent, et l'autoradio dispose en outre d'une entrée "MUTE" permettant de couper l'amplificateur de l'autoradio : cette entrée est alors activée pour assurer une transition entre les deux sources audio ;
- l'autoradio possède une entrée de type "auxiliaire" pouvant recevoir des signaux de faible niveau, qui seront amplifiés par le circuit de l'autoradio. Quatre possibilités peuvent se présenter :
   · l'autoradio est doté d'une entrée mono référencée à la masse de l'autoradio,
   · l'autoradio est doté de deux entrées stéréo référencées à la masse de l'autoradio,
   · l'autoradio est doté d'une entrée mono différentielle (signal mono appliqué entre deux bornes),
   · l'autoradio est doté de deux entrées stéréo différentielles (donc sur quatre bornes).

Le circuit que l'on va décrire permet de couvrir tous ces cas de figure, simplement en choisissant un câblage particulier pour la liaison entre le boîtier et l'autoradio ou le haut-parleur.

Comme on le verra, le circuit 56 couvre indifféremment les configurations où l'autoradio fournit ou ne fournit pas de masse audio ; dans ce dernier cas, c'est la masse du boîtier qui sera utilisée.

Ce circuit 56 comporte, en sortie d'un convertisseur numérique/analogique 58 délivrant un signal audio différentiel de bas niveau du téléphone "mains-libres", un amplificateur de puissance différentiel 60 attaquant en sortie, toujours en mode différentiel, les bornes HP+ et HP-.

Il comporte également deux circuits symétriques et identiques bas niveau mettant en oeuvre des amplificateurs différentiel 62 et 62'. L'une des entrées, par exemple de l'amplificateur 62, est reliée à une sortie correspondante du convertisseur 58, tandis que son autre entrée est reliée à une des bomes d'entrée L1- via le point milieu d'un pont diviseur constitué des résistances 64 et 66, la résistance 64 ayant typiquement une valeur de l'ordre de 1 % de la résistance 66. Le point froid du diviseur (résistance 64) est relié à la masse, et son point chaud (résistance 66) est relié à l'entrée de l'amplificateur 62, entrée à laquelle est par ailleurs appliquée une tension de référence V_{ref}, par exemple de 6 V, par l'intermédiaire d'une résistance 68. La sortie de l'amplificateur 62 est reliée d'une part à la borne L1+ via une résistance 70 et d'autre part à la borne HP+ via une résistance 72.

L'autre amplificateur 62' comprend les mêmes éléments, associés de façon exactement symétrique.

Le rôle de la résistance 64 est d'assurer une liaison de la borne L1- à la masse du circuit du boîtier, dans le cas où l'autoradio ne fournit pas de masse propre. À l'opposé, lorsque l'autoradio fournit une masse, le fil reliant cette borne de masse de l'autoradio à la borne L1- du circuit de boîtier présente une impédance très faible (typiquement inférieure à 1 Ω) par rapport à la valeur de la résistance 64 (typiquement de l'ordre de 100 Ω), ce qui permet de récupérer sur la ligne un signal présentant un niveau conforme.

Le branchement est effectué de la manière suivante, pour les divers cas de figure répertoriés plus haut :
- absence d'autoradio : raccordement direct du haut-parleur dédié entre les bornes HP+ et HP-,
- autoradio dépourvu d'entrée auxiliaire : raccordement entre HP+ et HP- via un relais de commutation externe ; dans le cas particulier d'un autoradio avec un amplificateur externe, l'un des canaux est raccordé à L1 + et L1-, l'autre canal à L2+ et L2-,
- autoradio dépourvu d'entrée auxiliaire et pourvu en outre d'une entrée "MUTE" : cette dernière est activée lorsque le circuit mains-libres est en fonctionnement (téléphone décroché),
- autoradio avec entrée "auxiliaire" :
   · entrée mono référencée à la masse : à raccorder entre L1+ et L1-,
   · entrées stéréo référencées à la masse : un canal à raccorder entre L1+ et L1-, l'autre entre L2+ et L2-,
   · entrée mono différentielle : à raccorder entre L1 + et L2+,
   · entrées stéréo différentielles : un canal à raccorder entre L1+ et L2+, l'autre entre HP+ et HP- ; dans ce dernier cas l'amplificateur 60 est mis en haute impédance par activation d'une broche HZ.

On notera que diverses variantes du circuit audio peuvent être envisagées, notamment avec un circuit 58 délivrant en sortie un signal audio non différentiel : dans ce cas, ce signal est appliqué sur une entrée unique (ou sur les deux entrées réunies) de l'amplificateur 60, et l'un des amplificateur 62 ou 62' est monté de manière à inverser ses entrées positive et négative afin de pouvoir délivrer en sortie des signaux en opposition de phase sur les bornes L1 + et L2+.

## Revendications

1. Un adaptateur "mains libres" pour téléphone portable, destiné notamment à être installé en première monte sur un véhicule automobile, cet adaptateur comprenant :
- d'une part, un boîtier universel installé à demeure dans le véhicule, ce boîtier comportant des bornes de liaison à des organes externes comprenant au moins une source d'alimentation (24) du véhicule, un microphone (28) et des moyens de restitution du son (30 ; 34),
- d'autre part, des moyens de liaison de ce boîtier avec te téléphone distant (10),
le boîtier (20) incluant un circuit de sortie audio (56) recevant en entrée un signal audio à reproduire et apte à délivrer des signaux de sortie sur une pluralité de bornes de sortie (HP+, HP-, L1+, L2+) sélectivement connectables auxdits moyens externes de restitution du son (30 ; 34) selon différentes configurations de raccordement possibles,
cet adaptateur étant **caractérisé en ce que :**
- le circuit de sortie audio (56) présente une configuration symétrique formée d'un amplificateur principal (60) et de deux amplificateurs secondaires (62, 62') avec leurs composants associés respectifs, l'amplificateur principal (60) est un amplificateur à sorties différentielles piloté en entrée par ledit signal audio à reproduire et dont les sorties délivrent un signal amplifié sur une première et une deuxième bornes de sortie correspondantes (HP+, HP-),
- chaque amplificateur secondaire (62 ; 62') est un amplificateur à entrées différentielles et à sortie non différentielle dont l'une des entrées est pilotée par ledit signal audio à reproduire, l'autre entrée est pilotée par un circuit de référencement de potentiel (64, 66, 68, V_{ref}), et la sortie délivre un signal sur une troisième borne de sortie (L1+ ; L2+), cette dernière sortie de l'amplificateur étant en outre couplée à l'une des bornes de sortie (HP+ ; HP-) de l'amplificateur principal.

2. L'adaptateur de la revendication 1, dans lequel le circuit de référencement de potentiel (64, 66, 68, V_{ref}) comprend une borne d'entrée (L1- ; L2-) susceptible, selon la configuration de raccordement choisie, d'être reliée ou non à un potentiel de masse externe, le circuit de référencement de potentiel étant apte à appliquer sur l'entrée correspondante de l'amplificateur secondaire soit un potentiel fonction seulement d'un potentiel donné (V_{ref}), si ladite borne d'entrée n'est pas reliée à un potentiel de masse externe, soit un potentiel fonction à la fois dudit potentiel donné (V_{ref}) et du potentiel de masse externe, dans le cas contraire.

3. L'adaptateur de la revendication 2, dans lequel ladite entrée correspondante de l'amplificateur secondaire est couplée à ladite borne d'entrée (L1- ; L2-) via le point milieu d'un pont diviseur (64, 66) dont l'une des branches est reliée à la masse du circuit de sortie audio et dont l'autre branche est reliée à l'entrée de l'amplificateur, cette entrée recevant par ailleurs ledit potentiel donné (V_{ref}).

4. L'adaptateur de la revendication 1, dans lequel la sortie de l'amplificateur secondaire est couplée aux bornes de sortie via le point milieu d'un pont diviseur (70, 72) dont l'une des branches est reliée à l'une des bornes de sortie (HP+ ; HP-) de l'amplificateur principal et dont l'autre branche est reliée à ladite troisième borne de sortie (L1+ ; L2+).

5. L'adaptateur de la revendication 1, comprenant- en outre des moyens de réglage de gain aptes à ajuster automatiquement l'amplitude de sortie audio à la dynamique desdits moyens externes de restitution du son, par identification automatique de ces moyens et/ou à partir d'informations externes fournies par le véhicule.

## Claims

1. A mobile phone "hands-free" adapter, especially devised to be fitted as original equipment in a motor vehicle, said adapter including :
- on the one hand, a universal box permanently fitted in the vehicle, said box including terminals for connection to external units including at least a power supply (24) of the vehicle, a microphone (28) and sound reproduction means (30 ; 34),
- on the other hand, means for connecting said box to the remote phone (10),
the box (20) including an audio output circuit (56) receiving an input audio signal to be reproduced and adapted to issue output signals on a plurality of output terminals (HP+, HP-, L1+, L2+) selectively connectable to said external sound reproduction means (30 ; 34) according to several possible connection arrangements,
said adapters being **characterised in that**:
- the audio output circuit (56) has a symmetrical configuration made up of a main amplifier (60) and two secondary amplifiers (62,62') with their respective associated components,
- the main amplifier (60) is a differential output amplifier driven from its input by said audio signal to be reproduced, and which outputs issue an amplified over a first and a second corresponding output terminals (HP+, HP-),
- each secondary amplifier (62, 62') is a differential input, non-differential output amplifier, having one output driven by said audio signal to be reproduced, the other output driven by a potential referencing circuit (64, 66, 68, V_{ref}), and the output issues a signal over a third output terminal (L1+, L2+), said latter output of the amplifier being further coupled to one of the output terminals (HP+, HP-) of the main amplifier.

2. The adapter according to claim 1, wherein the potential referencing circuit (64, 66, 68, V_{ref}) includes an input terminal (L1-, L2-) adapted, according to the configuration chosen, to be connected or not too an external ground potential, the potential referencing circuit being adapted to apply in this case on the corresponding input of the secondary amplifier either a potential which is only a function of a given potential (V_{ref}), if said input terminal is not connected to an external ground potential, or a potential which is a function both of said given potential and of the external ground potential, in the contrary case.

3. The adapter according to claim 2, wherein said corresponding input of the secondary amplifier is coupled to said input terminal (L1-, L2-) through the middle point of a dividing bridge (64, 66) having one branch connected to the ground of the external audio circuit and the other branch connected to the input of the amplifier, said input further receiving said given potential (V_{ref}).

4. The adapter according to claim 1, wherein the output of the secondary amplifier is coupled to the output terminals through the middle point of a dividing bridge (70, 72) having one branch connected to one of the output terminals (HP+, HP-) of the main amplifier and the other branch connected to said third output terminal (L1+, L2+).

5. The adapter according to claim 1, further including gain adjustment means adapted to automatically adjust the audio output amplitude to the dynamics of said external sound reproduction means, by automatic identification of said means and/or from external information provided by the vehicle.

## Patentansprüche

1. Ein "Freihand"-Adapter für ein Mobiltelefon, insbesondere dazu bestimmt, um bei der Erstmontage in einem Automobilfahrzeug eingebaut zu werden, wobei der Anschluss umfasst
- Einerseits eine Universalbox, die zum Verbleib in dem Fahrzeug eingebaut ist, wobei diese Box Verbindungsanschlüsse zu externen Mitteln umfasst, welche mindestens eine Stromquelle (24) des Fahrzeugs, ein Mikrofon (28) und Mittel zur Wiedergabe des Tons (30; 34) umfassen,
- andererseits Verbindungsmittel der Box mit dem entfernten Telefon (10),
- wobei die Box (20) ein Audioausgangsschaltkreis (56) mit einschließt, welcher am Eingang ein Audiosignal zur Wiedergabe empfängt und geeignet ist, um Ausgangssignale auf eine Vielzahl von Ausgangsanschlüssen (HP+, HP-, L1+, L2+) zu liefern, welche einzeln mit den externen Mitteln zur Tonwiedergabe (30; 34) gemäß verschiedener möglicher Anschlusskonfigurationen verbindbar Sind,
dieser Adapter dadurch charakterisiert wird, dass
- der Schaltkreis des Audioausgangs (56) eine symmetrische Konfiguration ist, welche aus einem Hauptverstärker (60) und zwei Sekundärverstärkern (62, 62') mit ihren jeweiligen zugeordneten Bauteilen gebildet wird,
- der Hauptverstärker (60) ein Verstärker mit Differenzialausgängen ist, welcher am Eingang durch das zu reproduzierende Audiosignal gesteuert wird, und dessen Ausgänge ein verstärktes Signal auf entsprechend einen ersten und einen zweiten der Ausgangsanschlüsse (HP+, HP-) liefern,
- jeder sekundäre Verstärker (62; 62) ist ein Verstärker mit differenziellen Eingängen und einem nichtdifferenziellen Ausgang, von denen ein Eingang von dem wiederzugebenden Audiosignal gesteuert wird, der andere Eingang von einem Potenzialreferenzschaltkreis (64, 66, 68, V_{ref}), gesteuert wird und der Ausgang ein Signal auf einem dritten Ausgangsanschluss L1+; L2+) liefert, wobei dieser letzte Ausgang des Verstärkers unter anderem an einen der Ausgangsanschlüsse (HP+; HP-) des Hauptverstärkers gekoppelt ist.

2. Der Adapter aus Anspruch 1, in welchem der Potenzialreferenzschaltkreis (64, 66, 68, V_{ref}) einen geeigneten Eingangsanschluss (L1-; L2-) mit einschließt, um, gemäß der gewählten Anschlusskonfiguration mit einem externen Massepotenzial verbunden oder nicht verbunden zu werden, wobei der Potenzialreferenzschaltkreis geeignet ist, um auf einem entsprechenden Eingang des Sekundärverstärkers entweder ein Funktionspotenzial nur eines gegebenen Potenzials (V_{ref}), wenn der Eingangsanschluss nicht an ein externes Massepotenzial angeschlossen ist, oder ein Funktionspotenzial gleichzeitig des gegebenen Potenzials (V_{ref}) und des externen Massenpotenzials in dem gegenteiligen Fall, anzuwenden.

3. Der Adapter aus Anspruch 2, in welchen der entsprechende Eingang des Sekundärverstärkers an den Eingangsanschluss (L1-; L2-) über einen Mittelpunkt einer Teilerbrücke (64, 66) gekoppelt ist, von welcher einer der Äste mit der Masse des Audioausgangsschaltkreises verbunden ist und von welcher der andere Ast mit dem Eingang des Verstärkers verbunden ist, wobei dieser Eingang folglich das gegebene Potenzial (V_{ref}) empfängt.

4. Der Adapter des Anspruchs 1, in welchem der Ausgang des Sekundärverstärkers an die Ausgangsanschlüsse über den Mittelpunkt einer Teilerbrücke (70, 72) gekoppelt ist, von der einer der Äste an einen der Ausgangsäste (HP+; HP-) des Hauptverstärkers verbunden ist und von denen der andere Ast an den dritten Ausgangsanschluss (L1 +; L2+) verbunden ist.

5. Der Adapter aus Anspruch 1, unter anderem Verstärkungsregelungsrnittel umfassend, welche geeignet sind, um die Audioausgangsamplitude automatisch an die Dynamik der externen Tonwiedergabemittel durch automatische Erkennung dieser Mittel und/oder ausgehend von externen Informationen, welche von dem Fahrzeug geliefert werden, anzupassen.
